# FASCICULE DE BREVET EUROPEEN

(11) **EP 0 853 547 B1**
(45) Date de publication et mention de la délivrance du brevet: **08.12.1999**
(21) Numéro de dépôt: 96931871.6
(22) Date de dépôt: 18.09.1996
(51) Int. Cl.: B29C 70/22

(54) **RUBAN PLAT NOTAMMENT POUR RENFORCER DES CONDUITES, SON PROCEDE DE FABRICATION, ET CONDUITES RENFORCEES PAR DE TELS RUBANS**
FLACHBAND IM BESONDEREN ZUM VERSTäRKEN VON LEITUNGEN, VERFAHREN ZU DESSEN HERSTELLUNG UND LEITUNGEN DIE DURCH DAS FLACHBAND VERSTäRKT WERDEN
FLAT STRIP, IN PARTICULAR FOR REINFORCING DUCTS, METHOD FOR MAKING SAME, AND DUCTS REINFORCED THEREWITH

(30) Priorité: 04.10.1995 FR 9511676
(43) Date de publication de la demande: 22.07.1998
(73) Titulaire: COFLEXIP, 92100 Boulogne-Billancourt (FR)
(72) Inventeur: LE NOUVEAU, Jo[l, F-76480 Yainville (FR); DO, Anh, Tuan, F-95240 Cormeilles-en-Parisis (FR)
(74) Mandataire: Levy, David
(86) Numéro de dépôt international: FR9601453
(87) Numéro de publication internationale: WO9712753

(56) Documents cités:
- DE-A- 3 246 945
- FR-A- 1 582 445
- FR-A- 2 160 591
- FR-A- 2 677 047

## Description

La présente invention concerne un ruban plat, notamment pour renforcer des conduites ainsi que des conduites renforcées par de tels rubans.

Une application intéressante du ruban plat selon l'invention est la réalisation des armures d'un flexible utilisé dans l'industrie pétrolière.

Il est proposé dans la littérature et l'industrie des rubans ou bandes pour des applications déterminées, chaque ruban ou bande étant constitué par des mèches filamentaires en matière synthétique ou naturelle, qui sont reliées entre elles par l'intermédiaire soit d'une matière de liage et ce, quel que soit le degré d'imprégnation desdites mèches, soit de fils textiles tissés, tressés, rubanés ou torsadés.

La technique de la première catégorie a l'inconvénient de nécessiter une proportion importante de matière pour assurer le liage des mèches entre elles. On assiste couramment à une proportion de matière de l'ordre de 50 % en volume même lorsque les fibres à l'intérieur des mèches ne sont que partiellement ou pas du tout imprégnées. Il en résulte une performance limitée en terme de résistance maximale admissible par unité de section. Ceci concerne en particulier le cas des profilés en matériau composite FRP (Fiber Reinforced Plastic) tel qu'un composite en fibre de verte ou fibre aramide et résine thermodurcissable ou thermoplastique aussi bien que le cas des rubans consistant en une nappe de "rovings" (par exemple en aramide) parallèles juxtaposés et contenus dans une masse de matière thermoplastique telle que du polyamide, ladite masse étant continue longitudinalement et transversalement.

D'autres inconvénients, exposés ci-après, ont été rencontrés dans l'usage de cette technique selon la nature de la matière de liage. Dans le cas où la matière est déformable, tel un thermoplastique, par exemple un polyamide, elle n'assure pas avec suffisamment de fermeté le maintien de la position radiale des mèches ou de la position relative des unes par rapport aux autres, lorsque le ruban est soumis à une traction élevée, comme c'est le cas lorsqu'il est enroulé autour d'une conduite. On a en effet constaté que les filaments mis sous tension tout en étant en appui sur un support incurvé ont tendance à se rapprocher de la surface support et à pousser radialement et latéralement les filaments inférieurs malgré la matière de liage. Il se produit donc un effet de fluage de la matière sous l'effet d'une pression de contact exercée par les filaments. Au contraire, dans le cas où la matière n'est pas déformable, telle une résine thermodurcissable, par exemple époxy, le ruban est rigide et donc se prête mal à l'enroulement autour d'une conduite.

Selon la technique de la deuxième catégorie, on a assisté à des perfectionnements visant à améliorer l'assemblage des mèches longitudinales. Ainsi, en tissage, il a été proposé d'ajouter ou de substituer aux fils de trame, des fils comportant de la matière thermofusible, la propriété thermocollante de cette matière étant révélée après tissage. La fonction de la matière thermofusible est d'assurer la stabilité des mèches entre elles après la découpe du tissu comme décrit dans le brevet FR 2 577 946.

On connaît également le brevet FR 2 677 047 qui décrit une armature textile sous forme de bande plane destinée à la réalisation de complexes stratifiés. L'armature comporte des fils longitudinaux espacés formant une structure unidirectionnelle et une tresse tubulaire aplatie formant une structure bidirectionnelle qui entoure les fils longitudinaux. Elle comprend également des fils comportant de la matière thermofusible pour lier les fils longitudinaux à la manière d'une trame tissée lâche. Après traitement thermique, la matière thermofusible assure le maintien des fils longitudinaux entre eux et leur liaison avec la tresse tubulaire.

Les produits décrits dans les brevets ci-dessus sont des produits intermédiaires de renforcement entrant dans la composition d'un complexe stratifié, par exemple des tubes en matériau composite FRP. Ils sont mis en oeuvre en étant noyés dans une résine thermodurcissable et en constituent l'élément de renforcement après durcissement de la résine. En tant que tels, ils doivent présenter des fils de chaîne ou de tresse nus pour permettre un bon accrochage de la résine servant de matrice à l'article stratifié.

Il a été constaté que l' assemblage des mèches avec la technique textile présente plusieurs inconvénients. Le type d'assemblage est tout d'abord pénalisé par un phénomène de déchéance dans la résistance des mèches. La déchéance exprime en pourcentage une perte de ténacité des mèches lorsqu'elles sont assemblées par rapport à la ténacité de la mèche prise individuellement. La déchéance est un paramètre qui augmente avec le nombre de mèches à assembler et qui dépend de la technique d'assemblage utilisée. Elle équivaut à une perte de rendement global du ruban qui peut dépasser 30 à 40 % selon les types d'assemblage. A cela s'ajoute une perte supplémentaire de rendement lorsque le ruban est soumis à une traction en étant en appui sur une surface incurvée. Dans ce cas, les mèches ne sont pas sollicitées ensemble à leur maximum de résistance (non équi-tension). Cette perte ne peut être compensée qu'avec l'ajout de nouvelles mèches, entraînant des frais financiers et un rendement encore plus défavorable.

Il a été proposé les rubans ou bandes décrits ci-dessus pour renforcer des conduites en lieu et place des renforts métalliques en raison de leurs performances et légèreté. Les rubans ou bandes sont mises en oeuvre dans la conduite de deux manières principales :
- par tressage circulaire autour d'un support tubulaire entrant dans la constitution de la conduite,
- par enroulement spiralé en plusieurs nappes superposées autour du même support tubulaire, lesdits rubans étant croisés d'une nappe à l'autre (nappes dites croisées).

Le cas échéant, ces mèches peuvent être enrobées dans la matière, le degré d'enrobage des filaments constituant les mèches pouvant varier selon les applications.

Actuellement, il existe une limitation quant au diamètre de la conduite lorsque les mèches sont disposées par tressage. En effet, au-delà d'un diamètre de 40 mm, les moyens mis en oeuvre pour tresser prennent des proportions considérables à cause du nombre de bobines et de leurs dimensions.

Une autre limitation existe quant aux performances des conduites sur le plan de la résistance mécanique en traction et en pression. En effet, pour obtenir de meilleures performances, la tendance est d'augmenter le nombre de mèches dans la conduite. Cela peut s'effectuer typiquement par deux moyens :
- en augmentant le nombre de tresses ou d'enroulements superposés dans la paroi de la conduite,
- en effectuant un pré-assemblage des mèches en nombre suffisant avant de les utiliser comme élément de renfort dans la fabrication de la conduite.

L'expérience montre que le premier moyen n'est pas satisfaisant. On a constaté qu'au-delà de deux tresses ou de deux paires d'enroulements croisés, les couches supplémentaires apportent une contribution médiocre à la résistance de la conduite.

Quant au deuxième moyen, on a constaté les différents inconvénients qui ont été rappelés ci-dessus à propos des diverses techniques d'assemblage des mèches.

Un autre phénomène pénalisant l'assemblage textile est la rotation des conduites. En effet, il a été constaté que des conduites comportant un armage par enroulement avec des rubans tissés conventionnels subissent un effet rotationnel de leur extrémité lorsqu'elles sont mises sous pression interne et/ou tension élevée. Un tel phénomène détériore les conduites ou rend leur utilisation impossible.

Il a également été constaté une détérioration à l'intérieur du ruban ou à sa surface par un phénomène d'abrasion qui se produit lorsque la conduite est soumise à des contraintes très élevées de traction, torsion, flexion de manière dynamique. De telles contraintes surviennent notamment sur des conduites de type flexible lorsqu'elles sont soumises à des opérations de manipulation et de pose fréquemment répétées, ou lorsqu'elles sont utilisées en tant que "riser" dynamique pour l'exploitation des champs pétroliers sous-marins.

Les inconvénients exposés ci-dessus concernent au moins en partie des articles allongés tels des bandes ou rubans de cerclage, des sangles, des cordages plats, des courroies, des bandes transporteuses, lorsque ces derniers sont soumis notamment à des contraintes de traction tout en étant en appui autour d'une surface courbe.

Il est connu par FR-A-2 160 591, un ruban comprenant une couche de mèches filamentaires longitudinales qui sont assemblées les unes avec les autres sous forme d'un faisceau, des moyens de contention entourant la couche de mèches filamentaires et une matière de liage disposée à l'interface des moyens de contention et des mèches filamentaires. Toutefois, les fils qui entourent le faisceau de mèches longitudinales sont des fils de trame ; de plus, la compacité des mèches filamentaires est telle que le faisceau est inapproprié pour une application dans un renforcement de conduites flexibles visées par la présente demande.

En conséquence, l'invention trouve une application privilégiée parmi les articles susvisés ou équivalents.

La présente invention a pour but de proposer un ruban plat qui présente une résistance optimale aux contraintes de traction notamment lorsqu'il est enroulé autour d'une surface courbe. Un autre but de la présente invention est un ruban plat

comprenant essentiellement des mèches filamentaires qui sont maintenues stables les unes par rapport aux autres quels que soient les efforts exercés sur ledit ruban.

La présente invention a pour objet un ruban plat du type comprenant :
- au moins une couche (2) de mèches filamentaires longitudinales (3) agglomérées les unes avec les autres sous forme d'un faisceau relativement plat dans une section sensiblement rectangulaire,
- des moyens de contention (4) entourant et serrant ladite couche de mèches filamentaires,
- une matière de liage (18) disposée au moins à l'interface desdits moyens de contention (4) et desdites mèches filamentaires longitudinales (3),
caractérisé en ce que :
les moyens de contention comprennent des éléments de liaison (19, 19a, 22, 22a) reliant les surfaces supérieure et inférieure dudit ruban à travers le faisceau de mèches longitudinales, sur toute la longueur dudit ruban, en ce que chaque mèche filamentaire longitudinale (3) présente une compacité moyenne au moins égale à 60 % et en ce que le ruban plat, après compression, présente une déchéance inférieure à 25 %.

Grâce à ces caractéristiques, le ruban est particulièrement performant en terme de résistance à la traction notamment lorsqu'il est en appui sur une surface incurvée.

Les mèches du faisceau ont une stabilité améliorée. Les moyens de contention s'opposent en effet à l'étalement des mèches dans le sens de la largeur du ruban en créant un blocage dimensionnel tandis que la matière de liage contribue à la stabilité de l'ensemble.

Pour des raisons de facilité de réalisation et de stabilité desdits éléments transverses par rapport au faisceau, de la matière de liage est disposée au moins à l'interface des éléments transverses et dudit faisceau ; selon une caractéristique préférée, et de manière complémentaire ou en alternative à la caractéristique ci-dessus, la matière de liage s'étend à travers ledit faisceau de mèches filamentaires au moins dans le sens de son épaisseur ; les moyens de contention sont, quant à eux, réalisés sous forme d'une gaine, ou d'une série de boucles individuelles ou d'une série de spires à base desdits éléments transverses.

Pour éviter une abrasion des mèches du faisceau entre elles, celles-ci sont enrobées d'une matière de liage. De manière avantageuse, on a constaté en outre une amélioration de la compacité à l'intérieur desdites mèches qui peut dépasser 70 %, ainsi qu'une amélioration de leur stabilité c'est-à-dire du maintien des mèches longitudinales les unes par rapport aux autres dans le ruban lorsqu'il est sous tension en appui sur une surface incurvée, quelles que soient les conditions d'utilisation du ruban selon l'invention.

Selon une caractéristique de l'invention, la proportion de la matière de liage dans le ruban est égale au plus à 40 %. Grâce à cette caractéristique, un excellent compromis entre la résistance à la traction, la stabilité des mèches et une bonne souplesse, est ainsi obtenu, la souplesse autorisant le ruban à s'enrouler autour d'une surface incurvée.

L'invention a également pour objet un procédé permettant de fabriquer un ruban qui soit conforme à l'invention et qui soit également résistant à l'abrasion des mèches du faisceau entre elles.

Le procédé est caractérisé en ce que :
- on réalise une enduction de surface d'au moins une partie des mèches filamentaires, par une matière de liage,
- on maintient tendues sous une charge contrôlée les mèches filamentaires longitudinales du faisceau pendant qu'on enroule autour desdites mèches les moyens de contention, et
- on comprime le faisceau ainsi assemblé pendant que la matière de liage est activée.

Ce procédé a notamment l'avantage de faciliter l'introduction de la matière de liage dans le ruban.

L'invention a également pour objet une première application du ruban en tant que ruban d'armure de conduites flexibles ce qui permet de réaliser des conduites de grand diamètre optimisées en résistance mécanique. En outre, il est possible de contrôler les effets néfastes tels que la rotation de la conduite flexible et l'abrasion des rubans. Il en résulte notamment que la pression admissible dans les conduites de grand diamètre est considérablement augmentée.

Une autre application intéressante du ruban selon l'invention est son utilisation dans les bandes transporteuses ou en tant que ruban de cerclage, sangle, cordage plat, courroies ou équivalents.

D'autres avantages et caractéristiques ressortiront mieux à la lecture de plusieurs modes de réalisation de la présente invention ainsi que des dessins annexés sur lesquels :
la figure 1 est une vue en perspective schématique d'une partie du ruban selon un mode de réalisation de l'invention,
la figure 2 est une vue en plan partielle et agrandie d'un mode de réalisation de la gaine de contention représentée sur la figure 1,
la figure 3 est une vue en plan partielle et agrandie d'un autre mode de réalisation de la gaine de contention représentée sur la figure 1,
la figure 4 est une vue en section partielle et agrandie d'un autre mode de réalisation de la gaine de contention représentée sur la figure 1,
la figure 5 est une vue en perspective schématique d'une partie du ruban selon un deuxième mode de réalisation,
la figure 6 est une vue en perspective schématique d'une partie du ruban selon un troisième mode de réalisation,
la figure 7 est une vue en perspective schématique d'une partie du ruban selon l'invention mais comprenant deux couches de mèches filamentaires,
les figures 8 à 10 sont des représentations schématiques en perspectives et latérales d'un autre mode de réalisation du ruban selon l'invention,
les figures 11 à 14 sont des vues en perspectives et en coupe d'un autre mode de réalisation du ruban selon l'invention,
la figure 15 est une vue très agrandie du ruban selon un mode préféré de l'invention,
la figure 16 est une vue en coupe transversale agrandie d'une partie du ruban selon l'invention,
les figures 17, 17a et 18 sont des vues en perspective de deux types de flexible.

Conformément à l'invention, le ruban comprend au moins une couche de mèches filamentaires longitudinales et des moyens d'assemblage de ces mèches. Les moyens d'assemblage comportent au moins une matière de liage imprégnant les mèches filamentaires au moins par endroits ainsi que décrit ci-après.

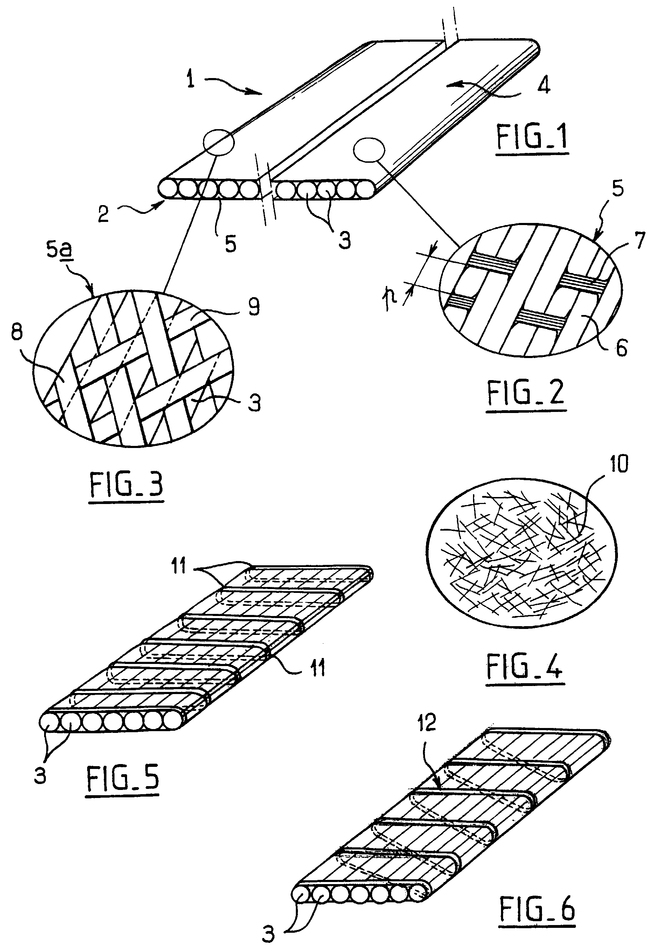

A la figure 1, le ruban 1 selon un premier mode de réalisation comprend une seule couche 2 de mèches filamentaires longitudinales 3 qui sont, conformément à l'invention, agglomérées les unes avec les autres et qui sont maintenues dans cet état aggloméré, sous forme d'un faisceau plat et dans une section sensiblement rectangulaire, par des moyens de contention 4, qui font partie des moyens d'assemblage des mèches au même titre que la matière de liage.

Au sens de l'invention, on entend par mèches un ensemble ou groupe de fils continus, retordus ou non retordus ensemble, chaque fil pouvant être un monofilament ou un ensemble de fibres ou de filaments continus ou discontinus, assemblés notamment par retordage ou filage. Un groupe de filaments continus retordus ou non retordus est communément appelé "roving". Le cas échéant, une mèche peut être obtenue par l'assemblage de plusieurs mèches élémentaires, par exemple par retordage ou simplement par un groupage parallèle de plusieurs mèches élémentaires.

Dans l'exemple, chaque mèche longitudinale est composée de filaments continus en aramide, groupés ensemble par retordage. Bien qu'une préférence soit donnée à des mèches de nature technique en aramide, carbone, verte, polyéthylène extra-linéaire, métallique, céramique... l'invention s'applique également à d'autres matériaux moins performants tel que le polyester.

Selon une caractéristique de l'invention, les moyens de contention sont à base d'éléments transverses obliques ou droits, c'est-à-dire qu'ils comportent de tels éléments, de façon à contenir et serter les mèches filamentaires du faisceau plat à l'état comprimé, chaque mèche filamentaire présentant une compacité moyenne déterminée au moins égale à 60 %. Ils s'opposent principalement à l'effet d'étalement des mèches dans le sens de la largeur du ruban en créant un blocage dimensionnel.

Au sens de l'invention, les éléments compris dans les moyens de contention peuvent être des fils continus, des monofilaments, des mèches filamentaires telles que définies ci-dessus, des constituants traditionnels des tissus non tissés ou encore par un mélange de monofilaments et de mèches filamentaires, les proportions respectives étant déterminées en fonction des applications du ruban et des propriétés mécaniques qu'il doit présenter dans telle ou telle application.

De préférence, les mèches du faisceau ont un contact longitudinal entre elles c'est-à-dire qu'elles sont jointives longitudinalement. Cela signifie que, de préférence, les mèches ne sont pas séparées ni par des éléments au sens de l'invention tels des entrelacements d'un tissage, ni à la limite par une grande quantité de matière de liage. En effet, le fait d'entrelacer les mèches provoque de la déchéance du faisceau et de la matière de liage en grande quantité réduit la compacité globale du ruban.

A contrario, tout entrelacement ou toute matière de liage qui induit peu ou pas de modification tant sur le plan de la déchéance du faisceau que de la compacité globale du ruban est susceptible de satisfaire les objectifs de l'invention. C'est le cas notamment de l'entrelacement d'un fil fin en matière thermofusible ou comprenant ladite matière, celle-ci se fondant par la suite aux mèches au cours de l'élaboration du ruban.

En conséquence, selon une caractéristique préférée de l'invention, les mèches du faisceau central sont exemptes d'élément qui les entrelacent.

Dans les exemples des figures 1 à 4, les moyens de contention sont constitués par une gaine de contention tubulaire 4, comportant des éléments transverses et à l'intérieur de laquelle sont disposées les mèches filamentaires 3.

Selon un mode de réalisation préféré, une matière de liage est disposée au moins à l'interface entre la gaine de contention 4 et les mèches filamentaires 3, ladite matière de liage étant par exemple un thermoplastique, de manière à lier la gaine aux mèches par imprégnation de leurs surfaces respectives.

La gaine de contention 4 de la figure 2 est constituée d'un tissu tubulaire aplati de type chaîne et trame. Des éléments transverses 7 sensiblement perpendiculaires à la direction longitudinale du ruban forment la trame, tandis que des mèches 6 sensiblement parallèles aux mèches 3 du faisceau 2 forment la chaîne. La trame 7 entrelace la chaîne 6 tout en entourant les mèches 3 du faisceau 2.

Dans cet exemple, la trame et la chaîne sont constituées d'une mèche filamentaire, bien qu'elles puissent être constituées chacune d'un fil ou d'un filament continu de résistance équivalente.

De préférence, la trame est espacée d'un pas p lâche supérieur à 5 fois son diamètre. On a constaté de bons résultats pour un pas égal à environ 10 fois son diamètre.

A la figure 3, la gaine de contention 4 est constituée d'un tissu de type tresse tubulaire aplatie. Des éléments transverses 8, 9 entrecroisés obliquement les uns par rapport aux autres sont utilisés pour réaliser la tresse. Ils sont également constitués dans cet exemple par des mèches au sens de l'invention. De la même manière que précédemment ces éléments peuvent être des monofilaments ou des fils continus de résistance équivalente à celle des mèches d'entrecroisement. Ils peuvent également être espacés du même pas p que ci-dessus.

A la figure 4, la gaine 4 à base de fils transverses est une gaine tubulaire en non tissé. Les constituants 10 des tissus non tissés peuvent être des fibres, filaments, fils continus ou discontinus assemblés de manière connue pour former un non-tissé.

Dans l'exemple, les éléments sont des fibres 10 d'une longueur préférée supérieure à 5 mm.

Les éléments transverses constituant le non-tissé peuvent être espacés de manière que la gaine non-tissée présente un taux de couverture du faisceau de mèches filamentaires de même ordre de grandeur que celui résultant de l'espacement existant entre les éléments 8 ou 9, ou 7 des figures 3 et 2 ou de l'espacement existant entre les éléments 11, 12 des figures 5 et 6.

Sur les figures 5 et 6, sont représentées des variantes des moyens de contention. Au moins un élément transverse forme, à la figure 5, une série de boucles 11 individuelles, tandis qu'il forme une série de spires 12 à la figure 6. Les boucles 11 ou les spires 12 entourent et serrent la couche de mèches 3 en étant réparties sur toute la longueur du faisceau d'une manière équivalente à la gaine de contention décrite précédemment. Elles sont réalisées à partir d'une mèche filamentaire bien qu'un fil ou un monofilament de même résistance que la mèche puisse convenir comme alternative.

La valeur de l'espacement entre deux boucles ou spires peut correspondre au pas p défini précédemment.

La matière de liage est également disposée à l'interface des boucles 11 ou des spires 12 et des mèches filamentaires 3.

Dans l'exemple, la matière de liage est avantageusement portée par les boucles 11 ou les spires 12 pour former un gainage des éléments transverses, bien qu'elle puisse être portée exclusivement par les mèches longitudinales 3 en constituant un gainage préalable à leur assemblage, ou encore à la fois par les éléments transverses 11 ou 12 et les mèches longitudinales 3.

D'une manière générale, les moyens de contention 4 sont conçus pour contenir au moins un faisceau 2 dans un état comprimé. L'état comprimé peut survenir soit pendant la fabrication du ruban 1 décrite infra, soit lors de son utilisation lorsqu'il est sollicité en tension pendant ou après enroulement autour d'une surface courbe.

Dans les deux cas, les mèches du faisceau sont comprimées dans le sens de l'épaisseur du ruban et ont tendance sous cet effet à s'étaler latéralement dans le sens de la largeur du ruban.

Les moyens de contention composés par exemple d'une gaine à base d'un ou de plusieurs fils transverses, s'opposent à l'encontre de l'étalement latéral des mèches, dans la mesure où ils contiennent le faisceau dans un périmètre prédéterminé initial. Les fils transverses de la gaine sont alors sollicités en traction et produisent une réaction autour du faisceau qui tend à comprimer les mèches sur elles-mêmes ou du moins dans le sens de la largeur (sens transversal), une compression dans le sens de l'épaisseur étant principalement réalisée, d'une part par le calandrage et, d'autre part, lors de son utilisation. Il y a par conséquent une compression des mèches 3 aussi bien dans le sens de l'épaisseur du ruban 1 que dans le sens de sa largeur.

Dans les deux cas ci-dessus, on utilise une certaine raideur à la traction et une résistance transversale des éléments transverses, notamment de la gaine 4 pour contenir, serrer les mèches 3 et s'opposer à leur déplacement latéral.

Pratiquement, ce sont cette raideur et résistance transversale qui vont déterminer la nature, le nombre des éléments de base constituant la gaine 4, et leur disposition (valeur du pas, par exemple).

Ainsi, par exemple, la matière de l'élément transverse de base peut être de type polyester lorsque la compression des mèches 3 n'est pas trop élevée dans les deux cas décrits ci-dessus. Pour une meilleure résistance, on peut employer des éléments de base de même nature que les mèches filamentaires 3 du faisceau 2 notamment en aramide, en verre, en carbone, en céramique...

La préférence est donnée toutefois aux éléments de base qui présentent un module d'Young élevé. Il a été constaté que la stabilité des mèches 3 est d'autant plus améliorée que le périmètre de la gaine est invariable.

Les fils de carbone, par exemple, conviennent pour constituer une gaine de contention au sens de l'invention. Ils sont très résistants et ils ont également un très faible allongement à la rupture.

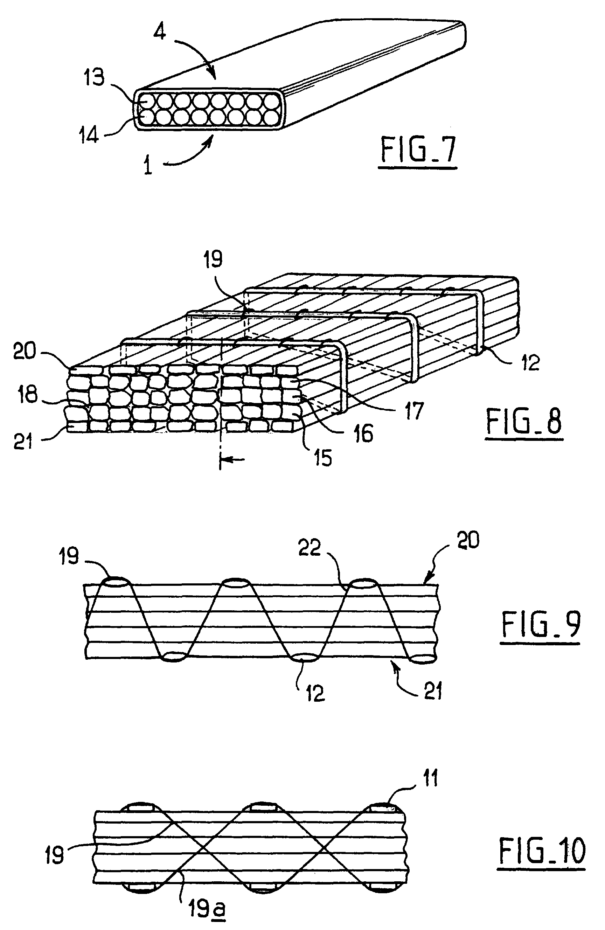

La figure 7 illustre un ruban 1 comprenant un faisceau constitué de deux rangées 13, 14 de mèches filamentaires. Pour éviter une reprise de volume du ruban 1 dans le sens de son épaisseur perpendiculairement à la surface de celui-ci, le ruban 1 comporte des moyens d'assemblage supplémentaires. Dans l'exemple de la figure 7, ces moyens sont constitués au moins par de la matière de liage portée longitudinalement par les mèches 3 du faisceau. Outre la fonction de lier les mèches, la matière de liage sert également à augmenter la résistance du ruban à l' écrasement, dans la mesure où elle se substitue à l'air emprisonné entre les deux rangées 13, 14 de mèches. Autrement dit, la matière de liage contribue à réduire l'amplitude de déformation du ruban 1 sous contrainte dans le sens de son épaisseur ainsi que dans le sens de sa largeur.

La matière de liage contribue également à stabiliser les mèches les unes par rapport aux autres (déplacement radial et/ou latéral) lorsque le ruban est sous contrainte de traction en étant en appui autour d'une surface courbe.

Il a été trouvé que les mèches sont susceptibles de migrer à l'intérieur du ruban malgré la présence de la gaine. Cela se produit notamment lorsque le ruban exempt de matière de liage dans le faisceau de mèches est soumis pendant longtemps à des contraintes de traction importantes et variables en étant en appui sur et autour d'une surface courbe.

Dans ce cas, on peut assister à une réorganisation des mèches au sein du ruban par migration comme expliqué ci-dessus.

La matière de liage est choisie parmi les matières aptes à lier les mèches directement ou indirectement par adhérence physique et/ou chimique et à suivre leur déformation notamment en allongement. Il a été constaté que les matériaux de dureté allant jusqu'à environ 60 shore D, convenait dans un ruban comportant des mèches de faisceau en aramide.

La matière de liage peut être choisie parmi les thermoplastiques tel que les polyamides, polyoléfines, vinyliques, fluorés, notamment les copolymères thermoplastiques et les thermoplastiques élastomères, ou bien parmi les élastomères tels que caoutchouc naturel ou synthétique, polyuréthanne, silicone. Les thermodurcissables tels que PTFE, certains polyuréthanes, sont envisageables également à condition toutefois de les employer en faible proportion de manière à conserver une flexibilité au ruban.

Une préférence est donnée aux matériaux thermoplastiques pour leur facilité de mise en oeuvre dans la fabrication du ruban.

La figure 8 illustre le cas où le nombre de rangées du faisceau devient plus important, par exemple trois rangées 15 à 17, les moyens de contention étant constitués par des spires 22. Il peut être prévu de compléter le moyen d'assemblage (gaine 4 et matière de liage 18) par des éléments de liaison 19, 22 pour relier les surfaces supérieures 20 et inférieure 21 du ruban à travers le faisceau de mèches longitudinales. Dans cet exemple, les éléments de liaison sont des mèches filamentaires au sens de l'invention bien que des fils continus ou des monofilaments de résistance équivalente puissent convenir également. Dans le cas où le fil de contention décrit des spires 12 (figure 9), l'élément de liaison 19, 22 progresse dans la direction longitudinale en passant alternativement au-dessus et en dessous des spires. Autrement dit, les éléments de liaison chevauchent les fils transverses tels que les spires 12 à la manière d'une couture. On obtient ainsi une structure textile de type 2,5D. Dans le cas où le fil de contention décrit des boucles (figure 10), le ruban peut comporter deux fils de liaison 19, 19a accrochant alternativement le fil supérieur d'une première boucle, puis le fil inférieur d'une deuxième boucle consécutive et ainsi de suite.

Ces éléments de liaison tendent à rapprocher les surfaces supérieure et inférieure du ruban lors de sa fabrication. Par la suite, ils contribuent principalement à stabiliser le ruban dans son épaisseur à l'encontre d'une éventuelle reprise de volume dans la direction perpendiculaire aux surfaces 20 et 21.

Selon un mode de réalisation, les éléments de liaison traversent le ruban à la manière d'un fil d'aiguilletage 22a comme illustré à la figure 9a qui représente un autre mode de réalisation.

Les fils de liaison 22a, ou 19, 22 peuvent porter la matière de liage ou une autre matière de liage complémentaire. Ils peuvent être du type âme/gaine, la gaine étant une enduction thermoplastique. Ils peuvent être également entièrement en thermoplastique, le fil entier étant thermofusible. D'une manière générale, la matière de liage peut être portée par ledit fil de liaison de façon exclusive ou non exclusive.

On constate que, lorsque la matière de liage est portée par lesdits éléments de liaison, elle s'étend à travers ledit faisceau de mèches filamentaires dans le sens de son épaisseur, ceci pouvant s'effectuer soit obliquement dans le cas de la couture illustrée à la figure 9 ou 10, soit verticalement dans le cas de l'aiguilletage illustré à la figure 9a.

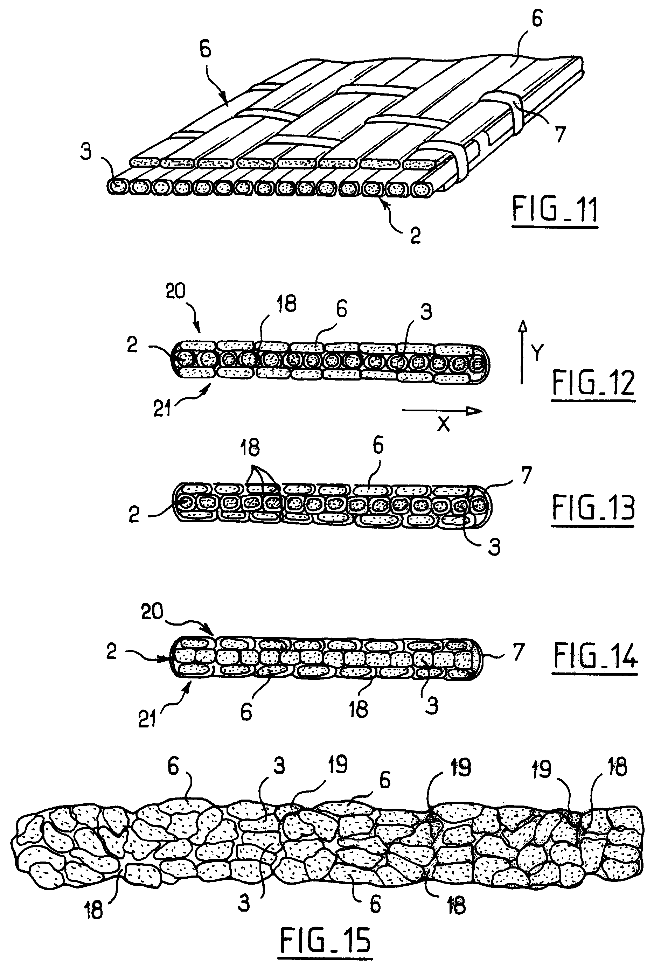

A la figure 11, on voit un mode de réalisation conforme à la figure 2. Ce mode est avantageux dans la mesure où il comporte une gaine constituée principalement de fils longitudinaux qui contribuent à la résistance à la traction du ruban. Il est aisé de constater que les fils de chaîne 6 sont aplatis dans la direction de l'épaisseur Y (verticale), tandis que les mèches 3 du faisceau 2 sont comprimées sur elles-mêmes dans deux directions X et Y, X étant la direction de la largeur.

Dans une variante (figures 11 et 12), la matière de liage 18 est disposée uniquement autour des mèches 3 du faisceau central 2. Selon cette variante, les surfaces supérieure 20 et inférieure 21 du ruban sont maintenues rapprochées par l'intermédiaire de la matière de liage, celle-ci étant au contact des deux surfaces 20 et 21.

La figure 13 illustre un mode de réalisation dans lequel la matière de liage 18 est disposée autour des fils de chaîne 6 de la gaine de contention 4, et autour des mèches 3 du faisceau 2. Les propriétés du ruban ainsi conçu avec au moins une enduction des fils 6 et mèches 3 sont particulièrement performantes, tant sur le plan de la traction que de la stabilité relative des mèches 3 entre elles, ainsi que le montrent les résultats d'essais présentés infra. Dans ce mode de réalisation, les fils de trame 7 de la gaine de contention 4 ne sont pas enduits.

La figure 14 illustre un mode de réalisation où la matière de liage 18 est disposée uniquement autour des fils de chaîne 6 composant la gaine de contention 4. Ce ruban présente une stabilité dimensionnelle par rapport à une reprise de volume en épaisseur, après une opération de compression et de chauffage, dans la mesure où les surfaces supérieure et inférieure sont reliées ensemble par l'intermédiaire d'une couche de mèches 3 du faisceau central 2.

D'une manière générale, dans tous les modes de réalisation dans lesquels les mèches 3 du faisceau 2 sont enduites, les fils constituant la gaine de contention 4, ou les spires 12, 22, ou les boucles 11 ou lesdits éléments de liaison 19, 19a peuvent être non enduits de matière. Cela a l'avantage de supprimer au moins une opération d'enduction.

Dans toute application où la gaine de contention 4 est soumise à un contact dynamique avec d'autres rubans ou d'autres surfaces abrasives, il convient d'avoir un revêtement de surface d'une matière à faible coefficient de frottement autour du ruban. Le revêtement peut être effectué préalablement ou postérieurement à l'élaboration du ruban. Lorsqu'il est effectué préalablement, par exemple pour des raisons économiques, chaque fil 6, 7 ou 8, 9, ou 10 et 11, composant la gaine de contention 4, est enduit au même titre que les mèches 3 du faisceau 2. Par contre, lorsqu'il est effectué postérieurement, celui-ci peut-être réalisé par tout procédé de revêtement connu tel que pulvérisation, immersion, pultrusion, gainage, bourrage.

Le revêtement de surface peut avantageusement conférer une surface lissée au ruban et une section rigoureusement rectangulaire. Cela est particulièrement intéressant pour des applications du ruban à des articles de cerclage ou cordage plat, etc.

De même, en cas d'une utilisation dynamique de la bande, on évite une abrasion interne entre les mèches constituant le faisceau, en les gainant d'une matière à faible coefficient de frottement, telle que du thermoplastique. Cette opération est réalisée préalablement à l'assemblage des mèches.

Un procédé de fabrication des rubans est décrit ci-dessous :

Plusieurs mèches longitudinales 3 sont maintenues tendues sous charge de contrôlée dans une installation conventionnelle de tissage ou de tressage et progressent linéairement, pendant que l'élément de contention est enroulé autour.

La progression du fil de contention est réalisée selon les modes de réalisation de la gaine ci-après.

Conformément à celui de la figure 3, au moins un élément de contention 8 est croisé avec au moins un autre 9, autour des mèches 3, selon la technique conventionnelle du tressage.

Conformément à celui de la figure 2, au moins un fil de trame 7 progresse autour du faisceau 2 en réalisant une armure de tissage avec des fils longitudinaux 6 parallèles aux mèches 3 du faisceau 2. De préférence, la trame 7 est tissée avec un pas de l'ordre du demi-centimètre.

Conformément à celui de la figure 5, le fil 10 de gaine réalise des boucles au fur et à mesure de la progression longitudinale des mèches 3 du faisceau 2.

Conformément à celui de la figure 6, le fil de gaine 11 est enroulé autour du faisceau 2 pendant une progression longitudinale de celui-ci.

Conformément à celui de la figure 4, on enroule en spirale un ruban de type non tissé autour des mèches 3 du faisceau 2 conformément à la technique du rubanage.

Conformément à celui de la figure 8, on réalise plusieurs coutures longitudinales 19 (quatre dans l'exemple) constituant les éléments de liaison 19, au fur et à mesure de la progression des mèches 3 du faisceau et de la trame.

De préférence, on dispose l'élément de contention autour des mèches, celles-ci étant préalablement groupées de manière à définir une section du faisceau de périmètre minimal par exemple sensiblement circulaire ou carré.

Après disposition de la gaine autour du faisceau 2, quel que soit le mode de réalisation, le ruban est soumis à une opération au cours de laquelle il est comprimé entre les deux surfaces 20, 21 pendant que la matière de liage 18 est activée. De préférence, le ruban est également tendu longitudinalement pendant qu'il est comprimé. La matière de liage 18 peut être portée par les fils de la gaine et/ou les mèches filamentaires du faisceau, et/ou les éléments de liaison 19, 19a c'est-à-dire par l'une quelconque des catégories d'élément constituant le ruban. Dans le cas où la matière de liage est un thermoplastique, notamment, l'activation est de nature thermique de manière à porter la matière à l'état fondu. Une telle opération peut être réalisée traditionnellement par calandrage, ou tréfilage à chaud.

Il a été constaté qu'il était avantageux d'utiliser des mèches gainées de thermoplastique, le gainage ou enduction de surface étant obtenus typiquement par extrusion. D'une part, les mèches possèdent déjà une bonne compacité en étant gainées, ce qui va dans le sens du résultat recherché par l'invention, d'autre part, il facilite l'opération consistant à obtenir un tissage serré. En outre, le gainage réduit les frottements dans les métiers à tisser.

De manière avantageuse, on peut diminuer le taux de matière de liage dans le ruban en gainant certaines mèches longitudinales du faisceau, par exemple une sur deux, ou en gainant une partie des mèches située par exemple à mi-distance du ruban pris dans sa largeur, de manière à avoir au milieu du ruban de la matière de liage qui s'étende à travers le faisceau dans le sens de l'épaisseur.

Un ruban de structure conforme à l'invention est représenté à une échelle agrandie sur la figure 15. Il comprend 66 fils 6 et mèches 3 longitudinaux (rovings) en aramide de 3 300 dtex chacun. Le faisceau comporte 49 mèches 3, tandis que la gaine conforme à la figure 2 comporte 17 fils de chaîne 6 répartis autour du faisceau. Un fil de trame (non visible), en aramide de titre égal, lie les fils de chaîne 6 avec un pas lâche de 0,5 cm. Le ruban comporte également quatre fils de liaison 19 de 1 170 dtex espacés régulièrement sur la largeur du ruban. Ils sont disposés de manière à relier alternativement le passage supérieur et inférieur de la trame autour du faisceau.

Tous les fils ont été enduits d'une enduction de surface en copolyamide préalablement à la fabrication du ruban. Avant calandrage le faisceau comprend deux rangées de 24 et 25 fils superposées l'une sur l'autre.

Après calandrage et traitement thermique, on a obtenu un ruban de section 16 mm x 2 mm (section du rectangle enveloppant).

Le ruban est alors constitué d'une certaine agglomération de fils, de matière de liage et d'air et présente l'aspect d'une mosaïque en coupe transversale. Les fils sont comprimés et agglutinés dans la direction de l'épaisseur, tandis que d'autres sont plus comprimés dans le sens de la largeur du ruban. La matière de liage est localisée à l'interface des fils et en périphérie des fils selon un gradient dégressif dans la direction du centre des fils. L'air est situé dans la zone centrale des fils.

La compacité moyenne ainsi obtenue a été de 640 tex/mm² mais une compacité moyenne supérieure à 550 tex/mm² pourrait convenir. Elle est nettement supérieure à la compacité d'un ruban textile traditionnel qui se situe généralement au mieux entre 400 et 500 tex/mm².

Les essais effectués sur le ruban ont montré une résistance à la rupture égale à 34 250 N et, par conséquent, une ténacité égale à 157 Centi-Newton/tex. En rapprochant ce résultat de la ténacité d'un fil aramide de 3 300 dtex qui est égal à 203 CN/tex, il en résulte que l'assemblage des 66 fils sous forme d'un ruban conforme à l'invention, présente une déchéance de 23 % seulement. A titre de comparaison, un assemblé de section circulaire, composé de 24 mèches en aramide de 3 300 dtex, testé dans des conditions identiques présentait une déchéance de 39 %. Un autre assemblé de section circulaire constitué de 48 mèches en aramide de 3 300 dtex chacun et d'une gaine plastique de 0,3 mm présentait également une déchéance de 39 %.

Une analyse d'image de la section transversale du ruban effectuée à l'aide d'un matériel et logiciel de traitement d'image "PHOTOSHOP" et "OPTILAB" ont permis de déterminer les proportions des constituants du ruban.

Pour des mèches filamentaires gainées, on obtient un taux apparent volumique de fibres dans la mèche de 84 % au centre du ruban et de 65 % en périphérie de celle-ci, soit un taux moyen de 74 %, ce taux appelé compacité est obtenu par le rapport de la surface totale des fibres d'une mèche à la surface occupée par la mèche. Un taux moyen de mèches dans le ruban mesuré étant de 69 %, on obtient un taux moyen de fibres dans le ruban de 51 %.

Le taux moyen de matière de liage située entre les mèches représente 31 % (100 % - 69 %) de la surface de la section du ruban, l'air étant uniquement contenu dans les mèches et la matière de liage étant principalement située entre les mèches et un peu dans les mèches par imprégnation des filaments situés en périphérie.

Il en résulte également que le taux moyen d'air dans les mèches, le ruban étant au repos, est de 100 % - 74 % = 26 % et que le taux moyen d'air dans le ruban est de 18 % (26 % x 69 %).

Pour des raisons de simplification, les valeurs ci-dessus sont calculées sans tenir compte de la matière de liage située dans le mèches.

D'une manière générale, les proportions des différents constituants du ruban susceptibles de convenir sont indiquées ci-après.

Dans le cas où les mèches longitudinales ne sont pas gainées de matière de liage :
- taux de fibres dans chaque mèche du faisceau central : supérieur à 60 % environ, le taux de fibres dans le ruban étant supérieur à 50 % environ.

Dans le cas où les mèches longitudinales sont gainées de matière de liage, les proportions deviennent alors :
- taux de fibres dans chaque mèche du faisceau central : 60 à 90 % et de préférence supérieure à 70 %, le taux de fibres dans le ruban étant supérieur à 40 % environ et de préférence supérieur à 50 %,
- matière de liage : 5 à 40 % et de préférence 20 à 35 %,
- air dans chaque mèche du faisceau central : 5 % à 40 % et de préférence 15 à 30 %.

Bien entendu, la proportion de l'un des constituants du ruban par rapport aux autres peut varier en fonction du taux de pénétration de la matière de liage dans les mèches filamentaires.

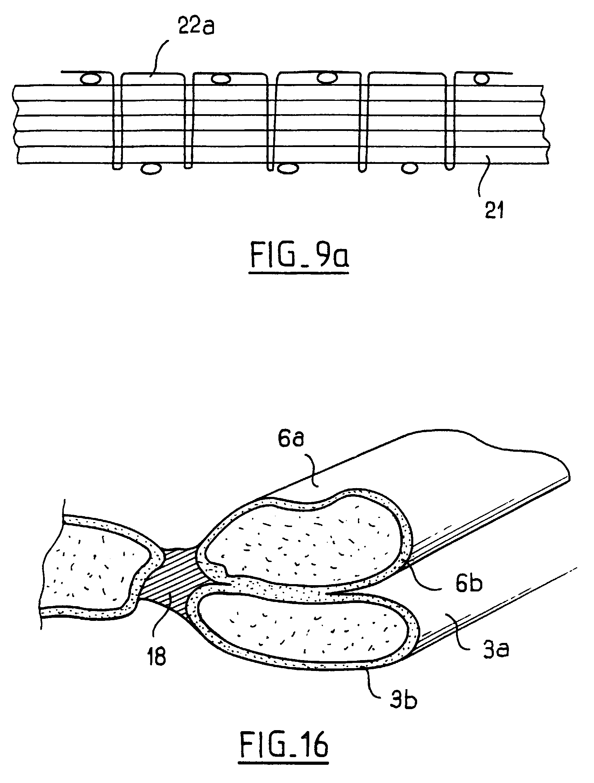

Suivant la figure 16, le produit obtenu présente en coupe transversale une structure alvéolaire, chaque alvéole 6a ou 3a s'étendant longitudinalement dans le ruban. La paroi 3b ou 6b de chaque alvéole correspond à la périphérie de chaque mèche 3 ou 6. La nature de la paroi 6b est assimilée à un composite constitué du matériau de liage et de fibres dans des proportions respectives de l'ordre de 35 % et de 65 %. Les alvéoles 6a sont reliées entre elles par de la matière de liage 18 sans fibres ou par une portion de leur paroi respective. L'épaisseur de cette paroi 6b est variable ; elle correspond à la profondeur de pénétration du matériau de liage dans chaque mèche. La profondeur de pénétration est telle que la surface de la section de la paroi représente environ 5 à 30 % de la surface de chaque mèche, et en moyenne de l'ordre de 10 %.

On remarque que dans l'ensemble, chaque mèche est au contact d'au moins une autre mèche de manière à avoir une portion de paroi commune. En moyenne chaque mèche est au contact avec au moins deux autres mèches.

Autrement dit, dans cet exemple aucune mèche ne se trouve totalement isolée des autres mèches par de la matière de liage exempte de fibres et qui l'entoure complètement.

On constate que dans ce mode de réalisation particulièrement avantageux, la matière de liage est non seulement disposée à l'interface desdits moyens de contention, en l'occurrence une gaine et les mèches filamentaires longitudinales du faisceau, mais elle s'étend encore à travers ledit faisceau par le cheminement des alvéoles. Ce cheminement s'effectue dans le sens de l'épaisseur et dans le sens de la largeur du ruban. De cette manière on obtient une excellente stabilité des mèches quelles que soient les conditions d'utilisation du ruban.

Inversement, on remarque que chaque mèche comporte également une portion de paroi reliée à au moins une paroi d'une autre mèche par de la matière de liage exempte de fibres.

En se référant toujours à la figure 16, dans le cas de l'exemple sur lequel ont été effectués les essais décrits supra, on a mesuré que :
- la matière de liage dans le ruban était environ de 32,8 %,
- l'air dans la mèche était environ de 23,5 %,
- l'air dans le ruban était environ de 16,2 %,
en considérant un taux moyen de fibres dans la mèche d'environ 74 %.

Grâce à l'invention, les rubans présentant une épaisseur réduite du fait de la compacité obtenue. Il en résulte de bonnes performances exposées supra en terme de contrainte maximale admissible lorsque le ruban est sollicité en traction linéairement.

Les performances du ruban sont encore plus remarquables comparativement à celles des rubans de l'état de la technique, lorsqu'il est en appui sur une surface incurvée. Dans ce cas, les mèches longitudinales ne peuvent pas être sollicitées ensemble à leur maximum de résistance car elles ne sont pas équi-tendues. Le ruban selon l'invention est peu affecté par cela dans la mesure où il est conçu pour avoir une compacité optimale. De ce fait, il est particulièrement adapté à l'obtention d'une résistance élevée en valeur absolue.

Autrement dit, par sa structure et sa compacité, l'invention permet non seulement de réduire la déchéance mais également le défaut d'équi-tension, chacun étant responsable d'une baisse de rendement directement lié à l'augmentation du nombre de mèches dans le ruban.

Ainsi, l'optimisation du ruban traduite en valeur signifie d'avoir les ratios suivants les plus élevés :
- ratio d'efficacité linéaire : Rᵣ/nR_{f}
   où Rᵣ est la résistance du ruban,
   où R_{f} est la résistance d'une mèche,
   et n étant le nombre de mèches longitudinales dans le ruban, le ruban étant soumis à une traction linéaire.
- ratio d'efficacité enroulé (Rᵣₑ/n.R_{f})
   où Rᵣₑ est résistance du ruban enroulé, le ruban étant sollicité en traction tout en étant en appui sur une surface incurvée.

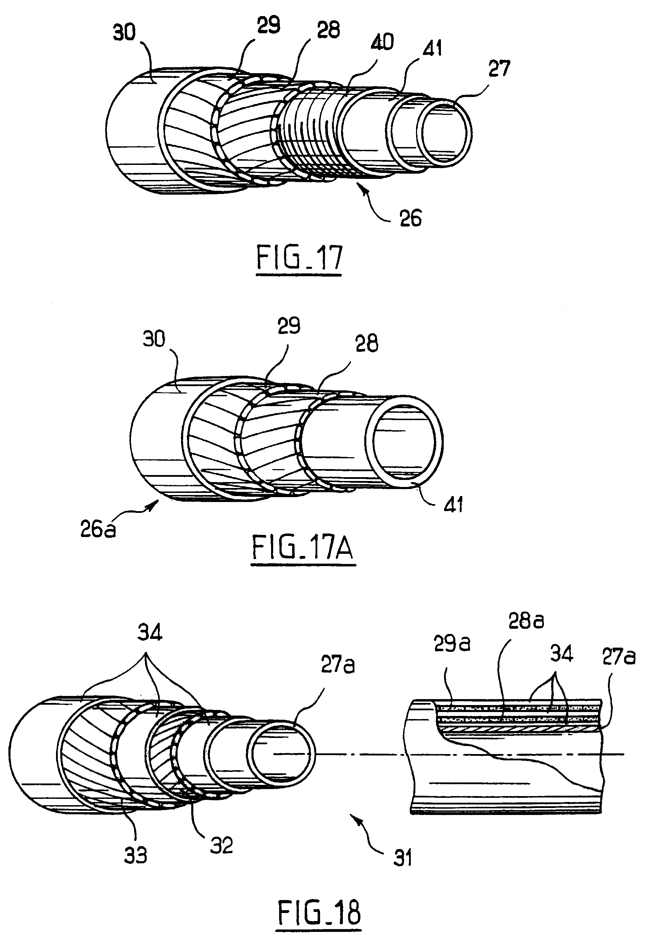

On va maintenant décrire une première application du ruban conforme à l'invention en tant que ruban d'armure de conduite flexible, tel qu'illustré aux figures 17 à 18.

Une conduite flexible comporte typiquement les couches tubulaires suivantes du centre vers l'extérieur :
- facultativement, une carcasse métallique non étanche de type tube métallique flexible par exemple en feuillard agrafé,
- une gaine d'étanchéité en matériau polymérique,
- facultativement et en fonction de la pression interne, une couche d'armure en fils métalliques agrafés et spiralés à faible pas (par exemple angle d'armage 80° par rapport à l'axe central) dite voûte de pression, assurant la résistance à la contrainte circonférentiellement induite par la pression (hoop stress),
- deux nappes superposées de fils ou rubans d'armure métalliques disposés hélicoïdalement autour de la couche précédente (nappes croisées). L'angle de l'hélice par rapport à l'axe central peut être typiquement de l'ordre de 55° dans le cas ou il n'y a pas de voûte de pression, ou inférieure à 55°, par exemple 30°, dans le cas d'un flexible avec voûte de pression. Ces nappes sont communément désignées comme armure de traction.
- une gaine de protection extérieure en matériau polymérique.

Suivant la désignation de l'API (American Petroleum Institute), une conduite flexible est dite "bonded" lorsqu'elle comprend plusieurs couches enroulées et extrudées individuellement, puis liées ensemble à l'aide d'adhésif ou unifiées sous l'effet de la température et/ou de la pression, et elle est dite "non-bonded" lorsqu'elle est constituée de plusieurs couches individuelles et séparées sans adhésion entre elles, chaque couche étant enroulée ou extrudée par dessus les couches qui sont situées au-dessous par un procédé continu sur toute la longueur de la conduite.

Dans le cas d'une conduite flexible du type "bonded" les nappes d'armures peuvent être enrobées de matière d'adhérisation. Cette conduite peut comprendre également une carcasse interne qui peut être ou non liée à la couche adjacente par de la matière d'adhérisation.

D'une manière générale, l'invention s'applique à des conduites flexibles 26 qui comportent tout ou partie des couches ci-dessus des conduites de type connu, le ruban selon l'invention se substituant avantageusement au ruban d'armure métallique. Elles comprennent au moins (Figure 17) :
- une partie tubulaire interne 40, 41, 27 apte au moins à supporter l'enroulement des rubans quand ils sont posés sous-tension lors de l'opération d'armage, à la fabrication. Cette partie tubulaire interne comprend une couche d'étanchéité 41 notamment polymérique, ou métallique enroulable par exemple à paroi ondulée et selon les applications envisagées elle peut comprendre en outre une autre couche telle qu'une voûte de pression 40 et/ou une autre couche telle qu'une carcasse métallique 27 permettant de conduire à des conduites de type "rough bore".
- une armure constituée de deux nappes de rubans 28, 29 superposées croisées l'une sur l'autre, une gaine de protection extérieure 30 pouvant être mise en fonction des applications.

La figure 17A représente schématiquement une conduite flexible 26a dite "smooth bore" et de type "non-bonded", comprenant un tube interne 41 en matériau polymérique, deux nappes d'amure 28 et 29 et une gaine extérieure de protection 30.

Chaque nappe d'armure 28, 29 est constituée par une pluralité de rubans selon l'invention et décrits précédemment.

A la figure 18, on voit une conduite 31 du type "bonded" conforme aux conduites de l'invention. Elle comporte deux nappes d'armure constituées de rubans 32, 33 conformes à celui de l'invention, lesdits rubans étant disposés sous forme de deux nappes croisées et enrobés d'une matière d'adhérisation 34. La matière d'adhérisation 34 forme une couche inférieure, intermédiaire et supérieure par rapport aux nappes. La conduite peut ou non comprendre une carcasse 27a selon qu'elle est de type "rough bore" ou "smooth bore".

Selon une variante des conduites des figures 6 et 7, les rubans sont remplacés par une tresse. On obtient donc respectivement une conduite à armure tressée de type "bonded" et "non-bonded".

Le cas échéant, le ruban d'armage conforme à l'invention peut également être utilisé uniquement en tant qu'élément de renfort résistant aux contraintes circonférentielles induites par la pression interne (voûte de pression non représentée). Dans ce cas, il est enroulé avec un pas faible, de manière identique à la voûte 40 de la figure 17, par exemple avec un angle d'armage de 85° par rapport à l'axe longitudinal d'une conduite.

Au cours d'essais de compression à chaud visant à atteindre une compacité optimale d'un ruban conforme à celui de l'exemple (figure 15), on a constaté que la matière de liage a tendance à pénétrer dans chaque mèche à partir de sa périphérie. On a également constaté qu'en poussant la pénétration plus fort ou plus longtemps, on obtient un profilé de type FRP de caractéristique homogène avec une distribution de fibres dans la matière de liage.

Par rapport au but visé par l'invention, un tel ruban présente une rigidité excessive et résiste excessivement ou se casse à la flexion. Il est donc recommandé de limiter la pénétration de la matière de liage dans la mèche et de conserver de l'air dans la mèche dans une proportion égale au minimum à 5 % environ et de préférence 15 % à 30 %. La flexibilité obtenue ainsi est satisfaisante même dans le cas ou plusieurs nappes de mèches longitudinales sont superposées dans l'épaisseur du ruban.

Du résultat ci-dessus, il a été également déduit qu'il convient de réaliser le ruban selon l'invention de telle sorte que sa raideur à l'écrasement et sa compacité tout en étant élevées restent volontairement en deçà des valeurs qui seraient obtenues si les mèches étaient entièrement imprégnées de matière de liage sans présence d'air. Il en résulte que la raideur du ruban à l'écrasement et sa compacité augmentent et peuvent atteindre un niveau optimal au fur et à mesure de son enroulement lors de l'opération de l'armage, celui-ci s'effectuant sous tension. Ainsi, une fois enroulé, le taux de fibres dans les mèches devient supérieure à 70 % et peut avoisiner le maximum théorique de l'ordre de 90 % selon l'effort de traction appliqué à l'enroulement. L'enroulement du ruban est facilité parce qu'elle contient de l'air, en quantité réduite (23,5 % d'air dans les mèches du faisceau central dans l'exemple).

Il a été constaté également que plus le ruban était compact au repos par rapport aux rubans connus, moins il était nécessaire de le tendre au cours de son enroulement pour atteindre une compacité prédéterminée. Cela signifie que l'effort exercé sur la couche interne tubulaire au cours de l'armage est d'autant plus faible que le ruban est compact au repos.

Il en résulte que le ruban à l'avantage de pouvoir être utilisé sur des conduites qui ont une faible résistance à l'écrasement (collapse), par exemple des conduites flexibles exemptes de carcasse. Autrement dit, grâce au ruban de l'invention on peut réduire l'épaisseur d'une couche tubulaire interne. C'est notamment le cas d'un tube en polymère sur lequel est réalisé l'armage.

Avantageusement, le ruban selon l'invention, présente un élargissement limité et contrôlable lorsqu'il est mis en oeuvre dans une conduite flexible. A cet égard, il est utile de préciser que l'élargissement des rubans provoque des chevauchements entre eux lorsqu'ils sont enroulés jointivement ou avec faible jeu. Les chevauchements sont néfastes car :
- ils réduisent la résistance de la nappe d'armure,
- ils créent une perturbation de la géométrie de la nappe,
- ils sont responsables d'un mauvais fonctionnement dynamique de la conduite,
- ils induisent des frottements latéraux importants des armures.

## Revendications

1. Ruban plat, du type comprenant :
- au moins une couche (2) de mèches filamentaires longitudinales (3) agglomérées les unes avec les autres sous forme d'un faisceau relativement plat dans une section sensiblement rectangulaire,
- des moyens de contention (4) entourant et serrant ladite couche de mèches filamentaires,
- une matière de liage (18) disposée au moins à l'interface desdits moyens de contention (4) et desdites mèches filamentaires longitudinales (3),
caractérisé en ce que :
les moyens de contention comprennent des éléments de liaison (19, 19a, 22, 22a) reliant les surfaces supérieure et inférieure dudit ruban à travers le faisceau de mèches longitudinales, sur toute la longueur dudit ruban, en ce que chaque mèche filamentaire longitudinale (3) présente une compacité moyenne au moins égale à 60 % et en ce que le ruban plat, après compression, présente une déchéance intérieure à 25 %.

2. Ruban plat selon la revendication 1, caractérisé en ce que la gaine de contention (4) est tissée, et dont les éléments de chaîne sont sensiblement parallèles aux mèches filamentaires longitudinales et les éléments de trame sont sensiblement perpendiculaires aux éléments de chaîne.

3. Ruban plat selon la revendication 1, caractérisé en ce que les mèches filamentaires longitudinales sont enrobées de matière de liage qui représente une proportion en volume du ruban égale au plus à 40 %.

4. Ruban plat selon la revendication 1, caractérisé en ce que chaque élément de liaison forme une couture longitudinale (19, 19a, 22).

5. Ruban plat selon la revendication 1, caractérisé en ce que chaque élément de liaison traverse le ruban verticalement à la manière d'un fil d'aiguilletage (22a).

6. Ruban plat selon la revendication 1, caractérisé en ce que chaque élément de liaison est enduit d'une matière de liage.

7. Ruban plat selon la revendication 1, caractérisé en ce que chaque élément de liaison est en matière de liage thermoplastique.

8. Procédé de fabrication du ruban selon la revendication 1, caractérisé en ce que :
- on réalise une enduction de surface d'au moins une partie des mèches filamentaires, par une matière de liage,
- on maintient tendues sous une charge contrôlée les mèches filamentaires longitudinales du faisceau pendant qu'on dispose autour desdites mèches au moins une gaine de contention, et
- on comprime le faisceau ainsi assemblé pendant que la matière de liage est activée.

9. Procédé selon la revendication 8, caractérisé en ce que la matière de liage est un thermoplastique et en ce que la compression du faisceau assemblé est effectuée par calandrage à chaud ou dans une opération de tréfilage à chaud.

10. Conduite flexible du type comportant une armure, caractérisé en ce que ladite armure est constituée par au moins un ruban selon lune des revendications 1 à 7.

11. Conduite flexible selon la revendication 10, caractérisée en ce que l'armure comporte au moins deux nappes superposées constituées chacune par une pluralité de rubans spiralés en sens opposés.

12. Conduite flexible selon la revendication 11, caractérisée en ce que les nappes de l'armure sont croisées à 55°.

13. Conduite selon la revendication 10, caractérisé en ce que l'armure est constituée de rubans tressés.

## Claims

1. Flat strip, of the type comprising:
- at least one layer (2) of longitudinal filamentary rovings (3) agglomerated with one another in the form of a relatively flat bundle with a substantially rectangular cross-section,
- retaining means (4) surrounding and clamping the said layer of filamentary rovings,
- a binding material (18) arranged at least at the interface of the said retaining means (4) and of the said longitudinal filamentary rovings (3),
characterized in that:
the retaining means comprise connecting elements (19, 19a, 22, 22a) connecting the upper and lower surfaces of the said strip through the bundle of longitudinal rovings over the entire length of the said strip, in that each longitudinal filamentary roving (3) has an average compactness of at least 60%, and in that the flat strip, after compression, has a shortfall lower than 25%.

2. Flat strip according to Claim 1, characterized in that the retaining sheath (4) is woven, and the warp elements thereof are substantially parallel to the longitudinal filamentary rovings and the weft elements are substantially perpendicular to the warp elements.

3. Flat strip according to Claim 1, characterized in that the longitudinal filamentary rovings are coated with binding material which represents a proportion by volume of the strip which is at most 40%.

4. Flat strip according to Claim 1, characterized in that each connecting element forms a longitudinal stitched seam (19, 19a, 22).

5. Flat strip according to Claim 1, characterized in that each connecting element passes through the strip vertically in the manner of a needling thread (22a).

6. Flat strip according to Claim 1, characterized in that each connecting element is coated with a binding material.

7. Flat strip according to Claim 1, characterized in that each connecting element is made of thermoplastic binding material.

8. Method for manufacturing the strip according to Claim 1, characterized in that:
- surface coating of at least part of the filamentary rovings with a binding material is carried out,
- the longitudinal filamentary rovings of the bundle are held tensioned under a controlled load while at least one retaining sheath is arranged around the said rovings, and
- the bundle thus assembled is compressed while the binding material is activated.

9. Method according to Claim 8, characterized in that the binding material is a thermoplastic, and in that the compression of the assembled bundle is carried out by hot calendering or in a hot-drawing operation.

10. Flexible duct of the type comprising a reinforcement, characterized in that the said reinforcement consists of at least one strip according to one of Claims 1 to 7.

11. Flexible duct according to Claim 10, characterized in that the reinforcement comprises at least two superposed laps each consisting of a plurality of strips wound spirally in opposite directions.

12. Flexible duct according to Claim 11, characterized in that the laps of the reinforcement are crossed at 55°.

13. Duct according to Claim 10, characterized in that the reinforcement consists of braided strips.

## Patentansprüche

1. Flachband
mit wenigstens einer Schicht (2) aus longitudinalen Filament-Lunten (3), die in Form eines relativ flachen Bündels mit einem im wesentlichen rechteckigen Querschnitt miteinander verpreßt sind,
mit Haltemitteln (4), die die Schicht aus Filament-Lunten umschließen und zusammendrücken,
mit einem Bindematerial (18), das zumindest an der Grenzfläche zwischen den Haltemitten (4) den longitudinalen Filament-Lunten (3) angeordnet ist,
dadurch gekennzeichnet,
daß die Haltemittel Verbindungselemente (19, 19a, 22, 22a) umfassen, die die Oberseite und die Unterseite des Bandes über die ganze Länge des Bandes durch das Bündel aus longitudinalen Lunten hindurch verbinden,
daß jede der longitudinalen Filament-Lunten (3) eine mittlere Packungsdichte von wenigstens 60% hat
und daß das Flachband nach dem Komprimieren einen Verlust von weniger als 25% hat.

2. Flachband nach Anspruch 1, dadurch gekennzeichnet, daß der Haltemantel (4) gewebt ist und seine Kettelemente im wesentlichen parallel zu den longitudinalen Filament-Lunten und seine Schußelemente im wesentlichen senkrecht zu den Kettelementen verlaufen.

3. Flachband nach Anspruch 1, dadurch gekennzeichnet, daß die longitudinalen Filament-Lunten mit Bindematerial umhüllt sind, das in dem Band ein Volumenverhältnis von mehr als 40% besitzt.

4. Flachband nach Anspruch 1, dadurch gekennzeichnet, daß jedes Verbindungselement eine Längsnaht (19, 19a, 22) bildet.

5. Flachband nach Anspruch 1, dadurch gekennzeichnet, daß jedes Verbindungselement das Band nach Art eines Nähfadens (22a) vertikal durchdringt.

6. Flachband nach Anspruch 1, dadurch gekennzeichnet, daß jedes Verbindungselement mit einem Bindematerial überzogen ist.

7. Flachband nach Anspruch 1, dadurch gekennzeichnet, daß jedes Verbindungselement aus einem thermoplastischen Bindematerial besteht.

8. Verfahren zur Herstellung des Bandes nach Anspruch 1,
dadurch gekennzeichnet,
daß man die Oberfläche wenigstens eines Teils der Filament-Lunten mit einem Bindematerial beschichtet,
daß man die longitudinalen Filament-Lunten des Bündels unter einer kontrollierten Belastung gespannt hält, während man wenigstens einen Haltemantel um die Lunten anordnet,
und daß man das so zusammengestellte Bündel komprimiert, während das Bindematerial aktiviert wird.

9. Verfahren nach Anspruch 8, dadurch gekennzeichnet, daß das Bindematerial ein Thermoplast ist und daß das Komprimieren des zusammengestellten Bündels durch Warmkalandrieren oder in einem Warmziehvorgang durchgeführt wird.

10. Flexible Rohrleitung mit einer Armierung, dadurch gekennzeichnet, daß die Armierung von wenigstens einem Band nach einem der Ansprüche 1 bis 7 gebildet wird.

11. Flexible Rohrleitung nach Anspruch 10, dadurch gekennzeichnet, daß die Armierung wenigstens zwei übereinanderliegende Lagen aufweist, die jeweils aus mehreren in entgegengesetzten Richtungen spiralig angeordneten Bändern bestehen.

12. Flexible Rohrleitung nach Anspruch 11, dadurch gekennzeichnet, daß die Lagen der Armierung unter einem Winkel von 55° einander kreuzen.

13. Flexible Rohrleitung nach Anspruch 10, dadurch gekennzeichnet, daß die Armierung aus geflochtenen Bändern besteht.
